# EUROPEAN PATENT SPECIFICATION

(11) **EP 4 492 299 B1**
(45) Date of publication and mention of the grant of the patent: **11.11.2026**
(21) Application number: 23185282.3
(22) Date of filing: 13.07.2023
(51) Int. Cl.: G06N 5/01, G06N 10/60, G06N 20/00

(54) **COMPUTER-IMPLEMENTED CLUSTERING METHOD AND COMPUTING SYSTEM**
COMPUTERIMPLEMENTIERTES CLUSTERINGVERFAHREN UND COMPUTERSYSTEM
PROCÉDÉ DE REGROUPEMENT MIS EN UVRE PAR ORDINATEUR ET SYSTÈME INFORMATIQUE

(43) Date of publication of application: 15.01.2025
(73) Proprietor: TOYOTA JIDOSHA KABUSHIKI KAISHA, Toyota-shi, Aichi-ken, 471 8571 (JP); ETH Zurich, 8092 Zürich (CH)
(72) Inventor: ABBELOOS, Wim, 1140 BRUSSELS (BE); ZAECH, Jan-Nico, 8092 ZURICH (CH); VAN GOOL, Luc, 8092 ZURICH (CH); DANELLJAN, Martin, 8092 ZURICH (CH)
(74) Representative: Cabinet Beau de Loménie

(56) References cited:
- US-A1- 2023 067 878
- PIATKOWSKI NICO ET AL: "Towards Bundle Adjustment for Satellite Imaging via Quantum Machine Learning", 2022 25TH INTERNATIONAL CONFERENCE ON INFORMATION FUSION (FUSION), INTERNATIONAL SOCIETY OF INFORMATION FUSION, 4 July 2022 (2022-07-04), pages 1 - 8, XP034163829
- BIRDAL TOLGA ET AL: "Quantum Permutation Synchronization", 26 November 2021 (2021-11-26), pages 13117 - 13128, XP055946013, ISBN: 978-1-6654-4509-2, Retrieved from the Internet <URL:https://arxiv.org/pdf/2101.07755.pdf> DOI: 10.1109/CVPR46437.2021.01292

## Description

### BACKGROUND OF THE INVENTION

### 1. Field of the Invention

The invention relates to the technical field of clustering, and in particular, to a computer-implemented clustering method, a computing system, a computer program, and a non-transitory storage medium.

### 2. Description of Related Art

Clustering, a vital machine learning method used extensively in computer vision, facilitates efficient data processing and unsupervised learning algorithms by grouping similar data points based on their features. Information extracted from clusters aids in training machine learning algorithms for a range of vision applications like image classification, segmentation, and tracking. However, due to the high computational cost of solving often NP-hard clustering problems, traditional clustering algorithms struggle with large-scale, real-world problems.

Annealing solvers hold the potential to tackle complex, NP-hard optimization problems, including critical tasks in computer vision. They are believed to offer significant speedup for clustering problems, which could potentially enable more efficient analysis of large datasets.

In general, existing annealing solver-based clustering methods only provide a single solution, which is considered optimal, usually the solution associated with the lowest energy. Nevertheless, in many clustering problems, there isn't a single, clearly best way to form clusters. Instead, there might be multiple valid solutions, each providing unique insights into the structure of the input data points. Moreover, the true solution might not always be the lowest-energy one due to noise or other errors in the input data. Discarding solutions that initially appear non-optimal could lead to a loss of valuable information. The subsequent document pertains to the art relevant to this disclosure: "Towards Bundle Adjustment for Satellite Imaging via Quantum Machine Learning" by Nico Piatkowski and others, presented at the 2022 25th International Conference on Information Fusion (FUSION) and published by IEEE. This research emphasizes two essential operations: extracting keypoints and matching features. It introduces quantum *k*-medoids clustering for keypoint extraction and another QUBO approach for feature matching.

### SUMMARY OF THE INVENTION

The present invention is defined by the appended claims. In a first aspect, the present disclosure provides a clustering method. The method includes obtaining valid solutions based on estimated solutions generated by an annealing solver. The valid solutions are solutions to a clustering problem of assigning input data points to clusters. The estimated solutions correspond to one or more first quadratic binary optimization problems that represent the clustering problem. The method further includes evaluating an energy associated with each of the valid solutions and determining confidence values for the valid solutions based on the evaluated energies.

An annealing solver is a device capable of implementing an annealing process and is designed to solve discrete optimization problems, which includes clustering problems. An annealing process corresponds to an evolution of a physical system to reach its equilibrium, given the couplings between the physical elements of the annealing solver. Generally, this equilibrium corresponds to a configuration of the elements that minimizes the total energy of the annealing solver. The annealing solver can be of any type, which could include implementations in hardware, software, or a combination of both. For example, the annealing solver may be a quantum annealing solver, a digital annealer (such as Fujitsu's digital annealer), or, a simulated annealing solver.

As can be appreciated, each of the one or more first quadratic binary optimization problems encodes the clustering problem. That is, the clustering problem is represented or formulated in the form of the one or more first quadratic binary optimization problems. The one or more first quadratic binary optimization problems are one or more quadratic unconstrained binary optimization (hereinafter "QUBO") problems.

The method may be implemented by a computing system including one or more computing components different than the annealing solver. For the sake of simplicity, the term "the computing component" will be used to refer to at least one of the one or more computing components in the rest of this section.

While existing clustering methods typically only find a single solution based on a pre-defined criterion, the present disclosure provides a range of possible solutions and quantifies the confidence in each, thereby giving a better overall picture of the possible clusterings and facilitating more informed decisions. In particular, the solutions together with their confidence values can be used to identify ambiguous samples and provide alternative clustering solutions within larger pipelines.

Moreover, in the context of annealing, the energy of a solution is usually directly related to how good/reliable the solution is: lower energy solutions correspond to better or more optimal solutions. The method thus provides a natural measure of the quality of the solutions by determining the confidence values based on energies associated with the valid solutions. Further, by using the computing component to evaluate the energy associated with each valid solution and compute the confidence values of the valid solutions based on the energies, the method is able to obtain calibrated confidence values, thereby providing more accurate results.

In particular, the evaluating step may be implemented through the use of a function designed to translate a solution to the clustering problem into an energy value. For instance, the function may be the objective function described below.

In an example that is compatible with any other example herein, the one or more first quadratic binary optimization problems each include an objective function representing a total energy associated with the clusters. In particular, this objective function may include terms, each of which represents an energy associated with one of the clusters. Further, if one of the terms corresponds to a cluster having a size greater than 1, then the term may indicate that the energy associated with the cluster is positively dependent on an aggregate distance measure between input data points assigned to the cluster or between each input data point assigned to the cluster and a reference point (such as the centroid/mean) of that cluster. For instance, the aggregate distance measure is equal to the sum of the squared Euclidean distances between all different pairs of input data points assigned to the same cluster. More specifically, the term may include the sum divided by half the size of the cluster, where the input data points included in different pairs are different.

To enable the annealing solver to generate the estimated solutions, the computing component may transmit the one or more first binary optimization problems to the annealing solver, over a network connection or a local connection.

The estimated solutions may be solutions to the one or more first quadratic binary optimization problems, which can be formulated using either spin variables s that take values in {-1, 1} or binary variables *z* that take values in {0, 1}, depending on the specifications of the annealing solver. Or, the estimated solutions are solutions to one or more second quadratic binary problems that are transformed from the one or more first quadratic binary optimization problems. For instance, some of the annealing solvers (e.g., the adiabatic quantum computers (hereinafter "AQCs")) operate using the Ising model and directly work with spin variables s rather than binary variables *z*. In this scenario, if the one or more first quadratic binary problems are represented using binary variables *z*, then the estimated solutions are solutions to one or more second quadratic binary optimization problems represented by spin variables s that can be derived from the one or more first quadratic binary problems using the relation *z* = 1/2(*s* + 1).

In another example that is compatible with any other example herein, the one or more first quadratic binary optimization problems follow the same clustering method or criterion. For instance, the clustering problem aims at assigning the input data points into a fixed number of clusters, where a reference point (e.g., the centroid/mean, or the prototype) of each cluster is positioned in a way that minimizes the aggregate distance measure between each data point assigned to the cluster and the reference point of the cluster. The aggregate distance measure refers to the total distance measure between the data points within the cluster and the reference point of that cluster. The distance measure could be calculated in several ways, such as Euclidean distance or squared Euclidean distance.

In still another example that is compatible with any other example herein, the input data points follow/are generated from distinct Gaussian distributions, or input data points for a cluster in a true solution to the clustering problem follow/are generated from a Gaussian distribution. Depending on the number of dimensions of each input data point, the Gaussian distribution(s) can be multidimensional or one-dimensional.

For example, if the input data points are vectors, input data points for each cluster may be generated from a distinct multidimensional Gaussian distribution.

Accordingly, the method may further include a step of the computing component generating the input data points from distinct Gaussian distributions, or a step of the computing component generating input data points for a cluster from a Gaussian distribution.

For instance, all the input data points are output by a neural network which is trained to generate outputs that follow one or more Gaussian distributions. In this case, the computing component may include the neural network.

In still another example that is compatible with any other example herein, the method further includes the annealing solver sampling the estimated solutions. Correspondingly, the computing system includes the annealing solver. Moreover, the annealing solver may be a quantum annealing solver, such as an AQC, which can offer significant speedup for complex computations, potentially enabling more efficient analysis of large datasets.

In still another example that is compatible with any other example herein, the valid solutions satisfy one or more constraints. Accordingly, obtaining the valid solutions based on the estimated solutions may include determining that one or more of the estimated solutions, or, one or more solutions transformed from one or more of the estimated solutions, satisfy the one or more constraints. The one or more transformed solution may be in a form that can be understood or processed in a subsequent step. For example, the transformation may refer to transforming spin variables s to corresponding binary variables *z* using the relation s = 2z - 1. The one or more estimated solutions, or the one or more transformed solutions are taken by the computing component as one or more of the valid solutions.

Further, the one or more constraints may specify that each of the input data points should be assigned to exactly one of the clusters (for instance, the clustering problem is a K-means clustering problem), and/or, that the number of input data points assigned to each of the clusters must match the preset size of the cluster.

The clusters have the same size or different sizes. In particular, the different sizes may be indicated by the one or more constraints.

In still another example that is compatible with any other example herein, the one or more constraints are integrated in at least one of the one or more first quadratic binary optimization problems. This could aid in minimizing the violation of the one or more constraints by the estimated solutions. In particular, the at least one first quadratic binary optimization problem may each include a constraint term representing the one or more constraints.

More specifically, the constraint term of each of the at least one first quadratic binary optimization problem may include one or more Lagrange multipliers corresponding to the one or more constraints. Accordingly, the at least one first quadratic binary optimization problem that includes the constraint term may be at least one Lagrangian function. In particular, the one or more Lagrange multipliers may each represent the weight of the corresponding constraint. The weights may be the same or different for different constraints.

Additionally or alternatively, the absolute value of the constraint term may be positively dependent on the absolute value of the degree of violation of each of the one or more constraints in solutions to the corresponding first quadratic binary optimization problem. In particular, the absolute value of the constraint term may positively depend on the absolute value of **G***ᵢ***z** - **d***ᵢ*, where *z* is a vector representing a solution to the first quadratic binary optimization problem that includes the constraint term, and **G***ᵢ* and **d***ᵢ* are respectively a vector and a number such that the *i*^{th} one of the one or more constraints on the solution is **G***ᵢ***z** = **d***ᵢ*. For example, the constraint term may be ${{\sum }_{i} λ}_{i} \left({z}^{T}{G}_{i}^{T}{G}_{i}z-2{d}_{i}{G}_{i}z\right)$, where λ***ᵢ*** represents a Lagrange multiplier corresponding to the *i*^{th} constraint.

For instance, if the clustering problem aims to assign four input data points into two clusters having the same size, the constraint that the first input data point must be assigned to exactly one cluster can be expressed as **G₁*z* = d₁**, where **d₁** = 1 and **G₁** = (1,0,0,0,1,0,0,0).

In still another example that is compatible with any other example herein, multiple first quadratic binary optimization problems may each include a different constraint term representing the one or more constraints. In particular, the constraint terms may each include a different set of Lagrange multiplier(s) or constraint weight(s). The difference may be the result of an iterative update process that includes one or more iterations. Such an update process can yield estimated solutions that closely approximate the optimal solution with high probability.

For example, one of the one or more iterations (which may or may not be the last iteration) includes: a step of computing a cost reduction associated with satisfying a constraint based on one or more current solutions that violate the constraint, and a step of adjusting the value of the Lagrange multiplier corresponding to the constraint based on the cost reduction. A current solution refers to one of the estimated solutions that corresponds to the first or second quadratic optimization problem which is most recently transmitted from the computing component to the annealing solver.

In particular, the absolute value of the cost reduction may be positively dependent on the absolute value of a difference between a cost associated with the constraint in a current solution that violates the constraint and a cost associated with the constraint in a first modified version of the current solution that fulfils the constraint. Both costs can be measured using the same cost function. A modified version of a current solution refers to a modified solution that is obtained by the method modifying the current solution.

Further, the first modified version of the current solution may be one that has the minimum cost associated with the constraint among modified versions of the current solution that fulfil the constraint.

For instance, if the objective function included in each of the one or more first quadratic binary optimization problems can be represented by ***z*^{T}Q*z***, where the vector *z* represents a solution to the corresponding first quadratic binary optimization problem, then the cost reduction may be positively dependent on the absolute value of a term $\left(z v G TQ{z}_{v}-{min}_{j}z j G TQ{z}_{j}\right)$, where $z v G T = \left({G}_{i}∘{z}_{v}^{T}\right)$ and $z j G T = \left({G}_{i}∘{z}_{j}^{T}\right)$*.* The vector ***zᵥ*** represents one of the current solutions that violates the *i*^{th} constraint, and the vector ***zⱼ*** represents a modified version of the solution ***zᵥ*** that satisfies the *i*^{th} constraint. The notation "o" refers to an elementwise product between two vectors.

Alternatively or additionally, the first modified version of the current solution may be obtained by using a greedy algorithm. For instance, if the current solution violates a constraint that one of the input data points (e.g., the first input data points) must be assigned to exactly one cluster by assigning this input data point to multiple clusters, then the first modified solution may be obtained by removing this input data point from one or more of the multiple clusters in the descending order of cost for the assignment of this input data point until the first input data is assigned to exactly one cluster. Or, if the current solution violates the same constraint by assigning this input data point to no cluster, then the first modified solution may be obtained by assigning the particular input data point to one of the clusters with the lowest cost for the assignment of this input data point. The cost for the assignment of this input data point may be evaluated by using a cost function, such as one that evaluates the distance from the data point to the centroid of a cluster or some other relevant metric.

Further, the cost reduction may be negatively dependent on the absolute value of the degree of violation of the constraint in the current solution. For instance, the cost function may be negatively dependent on the absolute value of **G***ᵢ***z***ᵥ* - **d***ᵢ*, where ***z**ᵥ* represents the current solution.

If the current solutions include multiple solutions that violate the *i*^{th} constraint, then the current solution (e.g., ***z**ᵥ*) mentioned in the previous paragraphs may represent the solution that corresponds to a maximal cost reduction among the multiple solutions.

On the other hand, the adjustment of the value of the Lagrange multiplier is typically positively dependent on the cost reduction, so that the more the solution violates the constraint, the larger the adjustment to the Lagrange multiplier. For example, the adjustment may be such that the penalty for violating the constraint is approximately equal to the cost reduction, in which case the adjustment step may include adding the cost reduction to the value of the Lagrange multiplier.

The iteration may further include a step of adding a constant to the value of the Lagrange multiplier. This could help to ensure that subsequently estimated solutions fulfil the one or more constraints. The constant may have a small value compared to the value of each Lagrange multiplier.

In addition, the last iteration of the update process may include a step of updating the value of the Lagrange multiplier by using the value that has the largest modulus among all previous values of the Lagrange multiplier. These previous values include the value(s) that is/are obtained through previous adjusting step(s) of the update process and the initial value of the Lagrange multiplier that is adjusted in the initial iteration of the update process.

The last iteration of the update process may further include a step of adding an offset to the updated value. Such an offset ensures that the modulus of the value of the Lagrange multiplier is sufficiently high, thus increasing the probability of sampling the optimal solution.

The number of the one or more iterations included in the update process can be preset. Alternatively, the update process can end when a specified number of valid solutions have been obtained.

The iterative update process may be performed by the computing component or by the annealing solver.

Accordingly, the different constraint terms of the multiple first quadratic binary optimization problems may each include a different set of one or more Lagrange multipliers that is obtained through a different iteration of the update process. Or, one of the different constraint terms includes an initial set of one or more Lagrange multipliers, and the other constraint term(s) each include an adjusted set of Lagrange multiplier(s) that is obtained through one of the iteration(s) of the update process. In particular, the initial set of one or more Lagrange multipliers may be obtained by using a classical clustering algorithm to solve the clustering problem.

In still another example that is compatible with any other example herein, one or each of the confidence values is an estimated posterior probability of the corresponding valid solution being optimal given the input data points. This provides interpretable and calibrated results.

Further, the posterior probability may be determined based on Bayes' theorem.

In still another example that is compatible with any other example herein, a confidence value of one of the valid solutions is determined further based on the total energy of the valid solutions. Or, a confidence value of one of the valid solutions is determined further based on the total energy of valid solutions corresponding to one of the one or more first quadratic binary optimization problems, where the valid solution is corresponding to the first quadratic binary optimization problem.

In still another example that is compatible with any other example herein, determining the confidence values of the valid solutions based on the evaluated energies includes determining the confidence values such that the confidence values follow a Boltzmann distribution. In particular, the temperature of the Boltzmann distribution is equal to a preset value. For instance, the preset value equals 1.

In still another example that is compatible with any other example herein, the frequency for sampling the estimated solutions by the annealing solver follows a Boltzmann distribution. In particular, the temperature of the Boltzmann distribution is equal to a preset value, which corresponds to a temperature at which high probability or low cost solutions are sampled by the annealer solver. For instance, the preset value equals 1.

In still another example that is compatible with any other example herein, each of the input data points represents an object or a significant attribute ("key point") of an object. The input data points each include features that are properties or characteristics corresponding to an object or an attribute of an object, which could provide essential information that differentiates one input data point from another. For instance, the features might be extracted from an image, such as using a neural network, or could be the output of a neural network that processes text or audio data. The object may be any real-world entity, as long as it can be described using a quantifiable set of features. For example, an object could be a car, a person, a sound, a piece of text, etc.

In the context of image analysis, a key point could be a corner associated with an object, which is a point within an image of the object that has a notable variation in intensity from different directions, or a point where the direction of the edges change. In other contexts, a key point might refer to a unique word in a text, a peak in an audio wave, or any other significant feature that helps to identify or categorize the object.

In still another example that is compatible with any other example herein, the method further includes the computing component outputting the valid solutions and the confidence values.

In still another example that is compatible with any other example herein, the method further includes a step of the computing component using a greedy algorithm to determine an assignment of a subset of the input data points to the clusters based on the valid solutions and the confidence values, where the assignment has a confidence value greater than any of the confidence values.

The determination may include an iterative process including one or more iterations. The one or more iterations each include: a step of finding a permutation of cluster labels in a first solution of the valid solutions that results in a minimum number of input data points being assigned to different clusters between the first solution and a second solution; and a step of updating the second solution by removing one or more input data points that are assigned to different clusters by the first solution and the second solution.

The former step above refers to a reassignment or rearrangement of labels of the clusters so that the cluster labels of the first solution aligns with those of the second solution for the purpose of further comparison.

In addition, prior to the updating step of the initial iteration of the iterative process, the second solution may be the same as one of the valid solutions that has the highest confidence value. The first solution in multiple iterations refers to different solutions that do not have the highest confidence value of the valid solutions.

Further, the initial value of a global confidence value may equal the highest confidence value of the valid solutions, which may be lower than a preset threshold. Each of one or more iterations may further include a step of updating the global confidence value by adding the confidence value of the first solution to the global confidence value. The iterative process may terminate when the global probability is equal to or greater than the preset threshold, and the second solution obtained by the last iteration of the iterative process is the desired assignment of a subset of the input data points to the clusters.

The method described above may be applied to a variety of scenarios across diverse technical fields including computer vision (such as feature matching and object tracking) and beyond. An example feature matching process involves identifying a set of distinctive features within an image and finding corresponding features in one or more other images. These features could include corners, edges, contours, or any other type of identifiable pattern. For instance, in an image of a building, these features could be architectural details like the corners of windows or edges of walls. An example object tracking process involves locating a moving object (or multiple objects) over time using a camera to keep track of its movement across several frames of a video. The method may be further used in the field of natural language processing to group documents or texts that share similar themes or topics, or, in market research to divide a broad consumer market into sub-groups of consumers with similar buying habits.

The one or more computing components may each include a processor. The one or more computing components may further include one or more computer-readable storage media storing instructions which, when executed by the one or more processors, enable the one or more processors to perform the corresponding steps described above.

The one or more computing components can either be standalone computing devices, internal components of a computing device, or a combination of both.

In a second aspect, the present disclosure provides another computing system for implementing the method according to the first aspect. The computing system includes an obtaining module, an evaluating module, and a first determining module. The obtaining module is configured to obtain valid solutions to a clustering problem of assigning input data points to clusters based on estimated solutions that are generated by an annealing solver and corresponding to one or more first quadratic binary optimization problems representing the clustering problem. The evaluating module is configured to evaluate an energy associated with each of the valid solutions. The first determining module is configured to determine confidence values of the valid solutions based on the evaluated energies.

In an example that is compatible with any other example herein, the computing system further includes a transmission module configured to transmit the one or more first binary optimization problems to the annealing solver. And/or, the computing system further includes the annealing solver, which is configured to sample the estimated solutions.

In another example that is compatible with any other example herein, the computing system further includes a generating module configured to generate the input data points from distinct Gaussian distributions, or configured to generate input data points for a cluster from a Gaussian distribution.

In still another example that is compatible with any other example herein, the obtaining module further includes a second determining module configured to determine that one or more of the estimated solutions, or, one or more solutions transformed from one or more of the estimated solutions, satisfy one or more constraints.

In still another example that is compatible with any other example herein, the computing system further includes an update module configured to perform an iterative update process.

In still another example that is compatible with any other example herein, the computing system further includes a third determining module configured to use a greedy algorithm to determine an assignment of a subset of the input data points to the clusters based on the valid solutions and the confidence values, where the assignment has a confidence value greater than any of the confidence values of the valid solutions.

In still another example that is compatible with any other example herein, the computing system further includes an outputting module configured to output the valid solutions and the confidence values.

In still another example that is compatible with any other example herein, the first determining module is further configured to determine the confidence values such that the confidence values follow a Boltzmann distribution.

Any of the modules described herein can be realized through software, hardware, or a combination of both. A software-implemented module represents one or more computer programs, sub-programs, or any program element capable of executing a function or a set of functions as described above for the relevant module. On the other hand, a hard-ward implemented module is embodied by any element of a hardware assembly capable of performing a function or a set of functions for the associated module, such as integrated circuit, chip card, memory card, etc.

For more implementation details of the second aspect, please refer to the first aspect.

In a third aspect, the present disclosure provides a computer program. The computer program includes instructions which, when executed by one or more processors, enable the one or more processors to perform the method as described in the first aspect.

The computer program can be developed in any programming language, and may exist in various formats including source code, object code, or any intermediate code that lies between source and object code, such as partially compiled code, or any other preferred form.

In a fourth aspect, the present disclosure provides a computer readable storage medium including the computer program, and/or, the one or more first quadratic binary optimization problems.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 illustrates the workflow of a method 100 according to a first embodiment;
FIG. 2 illustrates the workflow of an example procedure 200;
FIG. 3 illustrates the workflow of another example procedure 300; and
FIG. 4 is a schematic diagram of a computing system 400 according to a second embodiment.

### DETAILED DESCRIPTION OF EMBODIMENTS

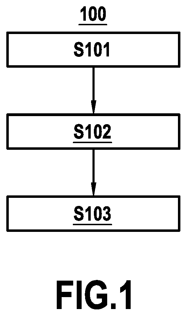

A first embodiment of the present disclosure is directed to a clustering method implemented by a computing system. As illustrated by Fig. 1, the clustering method 100 includes an operation S101 of obtaining valid solutions to a clustering problem based on estimated solutions that are generated by an annealing solver, an operation S102 of evaluating the energy associated with each of the valid solutions, and an operation S103 of determining confidence values of the valid solutions based on the evaluated energies. The estimated solutions correspond to one or more first quadratic binary optimization problems representing the clustering problem.

The operation S101 can include sub-operations, each responsible for obtaining one of the valid solutions. Similarly, the operation S102 can include sub-operations, each responsible for evaluating one of the energies associated with one of the valid solutions, and the operation S103 can include sub-operations, each responsible for determining the confidence value for one of the valid solutions. The arrow connecting block S101 to block S102 in Fig. 1 does not signify that all sub-operations of operation S101 are performed prior to any sub-operation of operation S102, but only represents that each individual sub-operation in operation S101 is performed before its corresponding sub-operation in operation S102. The same applies to the arrow connecting block S102 to block S103. This interpretation of the arrow's meaning applies uniformly across all work flow diagrams in this disclosure where arrows connect operations including sub-operations.

The first embodiment is illustrated below using a specific example.

In this example, the annealing solver is a quantum annealing solver such as a D-Wave Advantage2 Prototype 1.1. The computing system is a classical computer. The clustering problem is a balanced K-means problem where the size of each cluster is greater than 1.

The classical computer first encodes the clustering problem into a first QUBO problem. The first QUBO problem includes the following objective function (1): $E \left(X\left|Z\right.\right) = {\sum }_{k} {E}_{k} \left(X\left|Z\right.\right) = {\sum }_{k} \left[\frac{1}{{s}_{k}}{\sum }_{i} {\sum }_{j} {Z}_{ki} {Z}_{kj} {\left({x}_{i}-{x}_{j}\right)}^{T} \left({x}_{i}-{x}_{j}\right)\right] ⋅$ (1)

In the objective function (1), the term *E*(**X|*Z***) denotes a total energy associated with the clusters, while *Eₖ*(**X|*Z***) signifies an energy associated with the *k*^{th} cluster specifically. As can be appreciated, **X** represents the set of input data points, and Z represents the solution, which is to be optimized. Each *sₖ* represents the size of the corresponding cluster. The vectors **x*ᵢ*** and **x*ⱼ*** denote the *i*^{th} and the *j*^{th} input data point, respectively. The entries ***Z**ₖᵢ* and ***Z**ₖⱼ* of the permutation matrix **Z** indicate whether the *i*^{th} and the *j*^{th} input data points are assigned to the *k*^{th} cluster. ***Z**ₖᵢ* equals 1 if the *i*^{th} data point is assigned to the *k*^{th} cluster or 0 if not.

In particular, each element of the *i*^{th} input data point vector **x***ᵢ* represents a feature of an object represented by an image. The features are extracted from the image using a convolutional neural network (hereinafter "CNN").

Moreover, the input data points **X** follow different Gaussian distributions. Accordingly, the CNN has been trained to generate outputs that follow the different Gaussian distributions.

Further, the first QUBO problem includes the following constraint term (2): ${\sum }_{i} {λ}_{i} {\left({G}_{i}z-{d}_{i}\right)}^{2} ,$ (2) where **λ***ᵢ* represents a Lagrange multiplier that is the weight of the *i*^{th} constraint, *z* is a vector representing a solution to the first QUBO problem, and **G***ᵢ* and **d***ᵢ* are respectively a vector and a number such that the *i*^{th} constraint on the solution is **G***ᵢ***z** = **d***ᵢ*.

In particular, the constraint term (2) indicates that each of the input data points should be assigned to exactly one cluster, and that the number of input data points assigned to each cluster must match the preset size of the cluster.

The initial value of **λ***ᵢ* can be determined through an initialization process, which may include the following steps: finding an initial valid solution to the clustering problem that meets the *i*^{th} constraint (or all the constraints especially if a conventional K-means algorithm is used) using a conventional K-means algorithm or using the annealing solver, where the Lagrange multiplier **λ***ᵢ* may be originally set to 0; generating one or more invalid solutions that do not meet the *i*^{th} constraint by modifying the initial valid solution; calculating the maximal cost reduction associated with satisfying the *i*^{th} constraint based on the one or more invalid solutions; and adjusting the Lagrange multiplier ***λ***ᵢ according to the previously computed cost reduction such that violating the *i*^{th} constraint would lead to the same cost as previously calculated. An additional offset may be added to the value of **λ***ᵢ*. In particular, one of the one or more invalid solutions may be generated by modifying the assignment of an input data point in the valid solution. This can be done greedily by selecting the cheapest invalid assignment. For instance, the invalid solution may correspond to a reassignment among multiple potential reassignments that increases the cost the least.

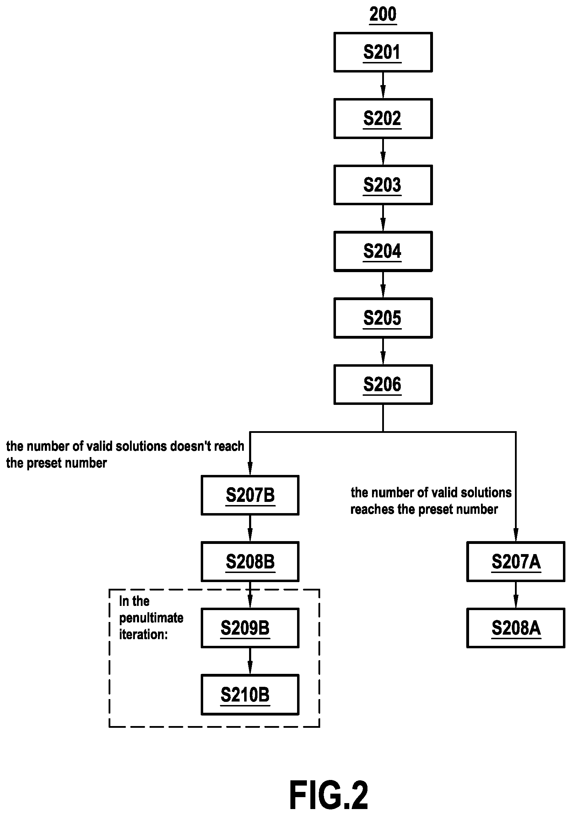

Then the procedure 200 as illustrated by Fig. 2 starts. At step S201, the classical computer transforms the first QUBO problem to an second QUBO problem by replacing the binary variables *z* in the first QUBO problem with spin variables s using the relation *z* = 1/2(*s* + 1).

At step S202, the classical computer transmits the second QUBO problem to the annealing solver.

The annealing solver samples estimated solutions to the second QUBO problem at step S203, and returns the estimated solutions to the classical computer at step S204.

The classical computer transforms the estimated solutions by using the relation *s* = 2*z* - 1 at step S205, and then uses the constraint term (2) to check if the transformed solutions satisfy the constraints at step S206.

If the number of transformed solutions that satisfy the constraints is equal to or greater than a preset number, then the classical computer takes these transformed solutions as valid solutions to the clustering problem, evaluates the energy associated with each of the valid solutions using the objective function (1) at step S207A, and determines the confidence values of the valid solutions based on the evaluated energies at step S208A.

The confidence value of each valid solution is a posterior possibility of the solution given the input data points. It is estimated using the equation (4) below: $p \left(Z\left|X\right.\right) = \frac{exp \left[-\left(E\left(X\left|Z\right.\right)\right)\right]}{{\sum }_{Z ′} exp \left[-\left(E\left(X\left|Z′\right.\right)\right)\right]} ,$ (4) where Z' represents all the valid solutions to the clustering problem that are obtained in the current iteration.

Otherwise if the number of valid solutions is smaller than the preset number, the classical computer performs the following steps S207B and S208B.

For each of the constraints, if one or more of the transformed solutions do not satisfy the specific constraint, then the classical computer computes a maximal cost reduction associated with satisfying the constraint based on the one or more transformed solutions at step S207B, and adjusting the value of the Lagrange multiplier associated with the constraint based on the maximal cost reduction at step S208B.

In particular, the objective function (1) can be represented by ***z*^{T}Q*z*,** where the vector *z* represents a solution to the corresponding first QUBO problem. The cost reduction associated with satisfying the *i*^{th} constraint that corresponds to a transformed solution ***z**ᵥ* equals $2 \left(z v G TQ{z}_{v}-{min}_{j}z j G TQ{z}_{j}\right) / {\left({G}_{i}{z}_{v}-{d}_{i}\right)}^{2} ,$ (3) where $z v G T = \left({G}_{i}∘{z}_{v}^{T}\right) , z j G T = \left({G}_{i}∘{z}_{j}^{T}\right)$, the vector ***z**ⱼ* represents a modified version of the solution ***z**ᵥ* that satisfies the *i*^{th} constraint and is obtained by using a greedy algorithm, and the notation "o" refers to an elementwise product between two vectors.

The maximal cost reduction is the maximum among all values of equation (3) calculated by using different transformed solutions ***z**ᵥ*.

The adjustment at step S208B includes adding the maximal cost reduction to the Lagrange multiplier.

The procedure 200 is then repeated for each first QUBO problem with an adjusted set of Lagrange multipliers until the number of valid solutions reaches the preset number.

In particular, in the penultimate iteration of the repetition of the procedure 200, steps S209B and S210B are implemented following the step S208B. At step S209B, for each of the Lagrange multipliers, the classical computer updates the value of the Lagrange multiplier by using a value that has the largest modulus among all previous values of the Lagrange multiplier. At step S210B, the classical computer adds an offset to each of the Lagrange multipliers.

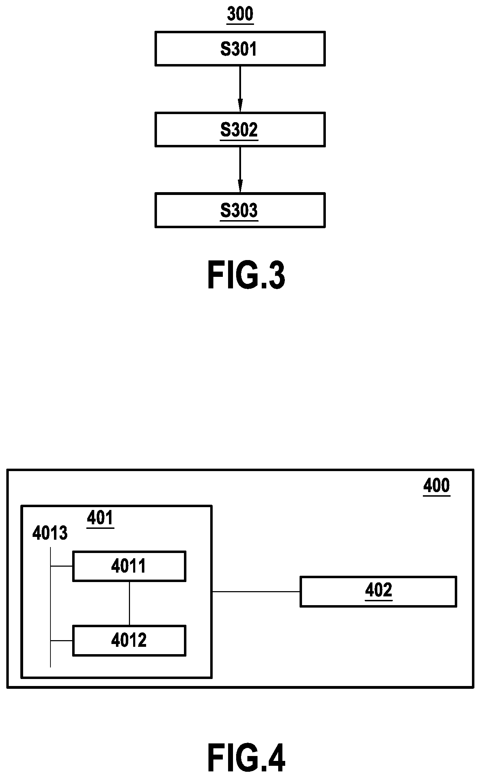

In another example procedure 300 as illustrated by Fig. 3, the classical computer further determines an assignment of a subset of the input data points to the clusters based on the valid solutions and their corresponding confidence values by using a greedy algorithm, where this assignment has a confidence value greater than any of the confidence values.

In this example produce, each of the valid solutions that does not have the highest confidence value is referred to as a "first solution". A second solution is originally the valid solution that has the highest confidence value. A global confidence value originally equals to the highest confidence value and is lower than a preset threshold.

At step S301, the classical computer finds a permutation of cluster labels in a first solution that results in a minimum number of input data points being assigned to different clusters between the first solution and the second solution. The classical computer then updates the second solution by removing one or more input data points that are assigned to different clusters by the first solution and the second solution at step S302, and updates the global confidence value by adding the confidence value of the first solution to the global confidence value at step S303.

For instance, the first solution assigns the first to third data points to the cluster labeled "1", the fourth and fifth data points to the cluster labeled "2", and the sixth to tenth data points to the cluster labeled "3", whereas the second solutions assigns the first to third data points to the cluster labeled "3", the fourth to seventh data points to the cluster labeled "1", and the eighth to tenth data points to the cluster labeled "2", then at the step S301, the classical computer relabels the clusters in the first solution by changing the label of the cluster originally labeled as "1" to "3", the label of the cluster originally labeled as "2" to "1", and the label of the cluster originally labeled as "3" to "2". The classical computer then removes the sixth and seventh data points from the cluster labeled "1" in the second solution at step S302, and adds the confidence value of the first solution to the confidence value of the second solution to obtain an updated global confidence value at step S303.

The steps S301-S303 are repeated until the global confidence value is equal to greater than the preset threshold. The final second solution is the desired assignment of a subset of the input data points to the clusters and the global confidence value is the confidence value of the desired assignment.

A second embodiment of the disclosure is directed to another computer system. As illustrated by Fig. 4, the computing system 400 includes one or more computing components represented by the computing component 401, which includes a processor 4011 and a memory 4012 storing instructions which, when executed by the processor 4011, enables the processor 4011 to implement the method 100 according to the first embodiment. The one or more first quadratic binary optimization problems are stored in the memory 4012 or one or more other memories of the computing component 401.

Examples of the processor 4011 include a central processing unit (hereinafter "CPU"), a vision processing unit (hereinafter "VPU"), a graphics processing unit (hereinafter "GPU"), a tensor processing unit (hereinafter "TPU"), a neural processing unit (hereinafter "NPU"), a neural processing engine, a core of a CPU, VPU, GPU, TPU, NPU or another processing device, an application processor, a display controller, an application specific integrated circuit (hereinafter "ASIC"), a field programmable gate array (hereinafter "FPGA"), a coprocessor, or any other hardware configured to function as a processing unit.

The memory 4012 or the memory storing the one or more first quadratic binary optimization problems may be any available medium that can be accessed by the one or more processors in the form of volatile or non-volatile memory. Examples thereof include a random access memory (hereinafter "RAM"), a dynamic random access memory (hereinafter "DRAM"), a static random access memory (hereinafter "SRAM"), any other form of volatile memory known in the art, a magnetic hard disk, an optical disk, a floppy disk, a flash memory, an electrically programmable memory (hereinafter "EPROM"), an electrically erasable and programmable memory (hereinafter "EEPROM"), any other form of non-volatile memory known in the art, a data server, etc.

The computing component 401 can either be a standalone computing device, an internal component of a computing device, or a combination of both. Examples of such a computing device include a high-performance computer, a server, a user device (e.g., a laptop computer, a home desktop computer, a mobile device such as a tablet, a smart phone, a wearable device, etc.), an embedded device (e.g., a device embedded within a vehicle, a household appliance, etc.), a platform having one or more corresponding application programming interfaces (hereinafter "APIs"), a cloud infrastructure, or any other computing device suitable for performing the corresponding steps of the method.

The processor 4011 and the memory 4012 may be directly or indirectly coupled to each other physically, communicatively, or operationally via a communication channel 4013.

As illustrated by Fig. 4, the computing system 400 further includes an annealing solver 402, which is connected to the computing component 401 via a network connection 403.

The computing system 400 may further include one or more communication components (not shown). The one or more communication components are configured to communicate with external devices via wired or wireless network(s) by transmitting or receiving network signals over network(s). Examples of a communication component include a network interface card such as an Ethernet card, an optical transceiver, a radio frequency transceiver, a universal serial bus controller, or any other device that can send or receive information.

The computing system 400 may further include one or more input components (not shown) which are configured to receive input. An input component may be a touch-sensitive screen, a mouse, a keyboard, a voice response system, a camera, a microphone, or any other device for detecting input from a human or machine.

The computing system 400 may further include one or more output components (not shown) which are configured to output data. An output component may be a video graphics adapter card, a cathode ray tube (hereinafter "CRT") monitor, a liquid crystal display (hereinafter "LCD"), or any other device for outputting data to a human or machine.

A third embodiment of the disclosure is directed to a computer program including the instructions stored in the memory 4012.

A fourth embodiment of the disclosure is directed to the memory 4012.

## Claims

1. A computer-implemented clustering method (100), comprising:
obtaining (S101) valid solutions to a clustering problem of assigning input data points to clusters based on estimated solutions that are generated by an annealing solver and corresponding to one or more first quadratic binary optimization problems representing the clustering problem, wherein each of the input data points comprises features corresponding to an object;
evaluating (S102) an energy associated with each of the valid solutions; and
determining (S103) confidence values of the valid solutions based on the evaluated energies, wherein each of the confidence values is an estimated posterior probability of the corresponding valid solution being optimal given the input data points,
wherein when the computer-implemented clustering method (100) performs a feature matching process, the features comprised in each of the input data points are extracted from one of images, and said feature matching process uses said valid solutions and their confidence values for identifying corresponding features in said images, or, when the computer-implemented clustering method (100) performs an object tracking process, the features comprised in each of the input data points are extracted from one of video frames, and said object tracking process uses said valid solutions and their confidence values for locating a moving object across said frames.

2. The method according to claim 1, wherein the valid solutions satisfy one or more constraints.

3. The method according to claim 1 or 2, wherein one of the one or more first quadratic binary optimization problems comprises a constraint term representing the one or more constraints, wherein
the constraint term includes one or more Lagrange multipliers each associated with one of the one or more constraints, or,
an absolute value of the constraint term is positively dependent on an absolute value of a degree of violation of each of the one or more constraints in solutions to the first quadratic binary optimization problem.

4. The method according to claim 2 or 3, wherein at least some of the first quadratic binary optimization problems each comprise a different constraint term representing the one or more constraints.

5. The method according to claim 4, further comprising an iterative update process comprising one or more iterations each adjusting one or more constraint weights, wherein one of the different constraint terms comprises the adjusted one or more constraint weights that is obtained through one of the one or more iterations.

6. The method according to claim 5, wherein one of the iterations comprises:
computing a maximal cost reduction associated with satisfying a constraint based on one or more current solutions that violate the constraint; and
adjusting a value of a constraint weight associated with the constraint based on the cost reduction.

7. The method according to claim 6, further comprising:
modifying one of the one or more current solutions to obtain a first modified version of the current solution that fulfils the constraint, wherein an absolute value of the cost reduction is positively dependent on an absolute value of a difference between a cost associated with the constraint in the current solution and a cost associated with the constraint in the first modified version of the current solution.

8. The method according to claim 7, wherein the first modified version of the current solution has a minimum cost associated with the constraint among modified versions of the current solution that fulfil the constraint, or, the first modified version of the current solution is obtained by using a greedy algorithm.

9. The method according to any one of the claims 1 to 8, wherein each of the one or more first quadratic binary optimization problems comprises an objective function representing a total energy associated with the clusters.

10. The method according to any one of the claims 1 to 9, wherein the clustering problem aims to position a reference point of each of the clusters in a way that minimizes an aggregate distance measure between each input data points assigned to the cluster and the reference point of the cluster.

11. The method according to any one of the claims 1 to 10, further comprising:
determining, by using a greedy algorithm, an assignment of a subset of the input data points to the clusters based on the valid solutions and the confidence values, wherein the assignment has a confidence value greater than any of the confidence values,
wherein the step of determining, by using the greedy algorithm, the assignment of the subset of the input data points to the clusters comprises one or more iterations, and the one or more iterations each comprise:
a step of finding a permutation of cluster labels in a first solution of the valid solutions that results in a minimum number of input data points being assigned to different clusters between the first solution and a second solution;
a step of updating the second solution by removing one or more input data points that are assigned to different clusters by the first solution and the second solution; and
a step of updating a global confidence value by adding a confidence value of the first solution to the global confidence value,
wherein prior to the updating step of an initial iteration of the one or more iterations, the second solution has a highest confidence value among the valid solutions, the confidence value of the first solution is lower than the highest confidence value, and when the determining step comprises multiple iterations, the first solution in each of the iterations refers to a different one of the valid solutions,
wherein an initial value of the global confidence value equals the highest confidence value, and the one or more iterations terminate when the global confidence value is equal to or greater than a preset threshold .

12. A computing system, comprising:
an obtaining module configured to obtain valid solutions to a clustering problem of assigning input data points to clusters based on estimated solutions that are generated by an annealing solver and corresponding to one or more first quadratic binary optimization problems representing the clustering problem, wherein each of the input data points comprises features corresponding to an object;
an evaluating module configured to evaluate an energy associated with each of the valid solutions; and
a first determining module configured to determine confidence values of the valid solutions based on the evaluated energies, wherein each of the confidence values is an estimated posterior probability of the corresponding valid solution being optimal given the input data points,
wherein when the computing system is configured to perform a feature matching process, the features comprised in each of the input data points are extracted from one of images, and the computing system is configured to use said valid solutions and their confidence values for identifying corresponding features in said images, or, when the computing system is configured to perform an object tracking process, the features comprised in each of the input data points are extracted from one of video frames, and computing system is configured to use said valid solutions and their confidence values for locating a moving object across said frames.

13. A computer program, comprising instructions which, when executed by one or more processor, enable the one or more processors to perform the method according to any one of the claims 1 to 11.

14. A computer readable storage medium, comprising the computer program according to claim 13.

## Patentansprüche

1. Computerumgesetztes Clustering-Verfahren (100), umfassend:
Erzielen (S101) von gültigen Lösungen für ein Clustering-Problem des Zuteilens von Eingangsdatenpunkten zu Clustern basierend auf geschätzten Lösungen, die von einem Annealing-Solver erzeugt werden und einem oder mehreren ersten quadratischen binären Optimierungsproblemen, die das Clustering-Problem darstellen, entsprechen, wobei jeder der Eingangsdatenpunkte Merkmale umfasst, die einem Objekt entsprechen;
Beurteilen (S102) einer Energie, die jeder der gültigen Lösungen zugeordnet ist; und
Bestimmen (S103) von Konfidenzwerten der gültigen Lösungen basierend auf den beurteilten Energien, wobei jeder der Konfidenzwerte eine geschätzte posteriore Wahrscheinlichkeit dafür ist, dass die entsprechende gültige Lösung angesichts der Eingangsdatenpunkte optimal ist,
wobei, wenn das computerumgesetzte Clustering-Verfahren (100) einen Merkmalsabgleichprozess ausführt, die Merkmale, die in jedem der Eingangsdatenpunkte enthalten sind, aus einem der Bilder extrahiert werden, und der Merkmalsabgleichprozess die gültigen Lösungen und ihre Konfidenzwerte verwendet, um entsprechende Merkmale in den Bildern zu identifizieren, oder wenn das computerumgesetzte Clustering-Verfahren (100) einen Objektverfolgungsprozess ausführt, die Merkmale, die in jedem der Eingangsdatenpunkte enthalten sind, aus einem der Videoeinzelbilder extrahiert werden, und der Objektverfolgungsprozess die gültigen Lösungen und ihre Konfidenzwerte verwendet, um ein sich bewegendes Objekt über die Einzelbilder hinweg ausfindig zu machen.

2. Verfahren nach Anspruch 1, wobei die gültigen Lösungen eine oder mehrere Randbedingungen erfüllen.

3. Verfahren nach Anspruch 1 oder 2, wobei eines der einen oder mehreren ersten quadratischen binären Optimierungsprobleme einen Randbedingungsterm umfasst, der die eine oder die mehreren Randbedingungen darstellt, wobei
der Randbedingungsterm einen oder mehrere Lagrange-Multiplikatoren umfasst, die jeweils einer der einen oder mehreren Randbedingungen zugeordnet sind, oder
ein absoluter Wert des Randbedingungsterms von einem absoluten Wert eines Verletzungsgrades jeder der einen oder mehreren Randbedingungen in Lösungen für das erste quadratische binäre Optimierungsproblem positiv abhängig ist.

4. Verfahren nach Anspruch 2 oder 3, wobei mindestens einige der ersten quadratischen binären Optimierungsprobleme jeweils einen anderen Randbedingungsterm umfassen, der die eine oder die mehreren Randbedingungen darstellt.

5. Verfahren nach Anspruch 4, ferner umfassend einen iterativen Aktualisierungsprozess, der eine oder mehrere Iterationen umfasst, die jeweils ein oder mehrere Randbedingungsgewichte anpassen, wobei einer der verschiedenen Randbedingungsterme das eine angepasste Randbedingungsgewicht oder die mehreren angepassten Randbedingungsgewichte umfasst, das bzw. die durch eine der einen oder mehreren Iterationen erzielt wird bzw. werden.

6. Verfahren nach Anspruch 5, wobei eine der Iterationen umfasst:
Berechnen einer maximalen Kostenreduzierung, die dem Erfüllen einer Randbedingung zugeordnet ist, basierend auf einer oder mehreren aktuellen Lösungen, welche die Randbedingung verletzen; und
Anpassen eines Wertes eines Randbedingungsgewichts, das der Randbedingung zugeordnet ist, basierend auf der Kostenreduzierung.

7. Verfahren nach Anspruch 6, ferner umfassend:
Modifizieren einer der aktuellen Lösungen, um eine erste modifizierte Version der aktuellen Lösung zu erzielen, welche die Randbedingung erfüllt, wobei ein absoluter Wert der Kostenreduzierung von einem absoluten Wert einer Differenz zwischen einem Kostenwert, der der Randbedingung in der aktuellen Lösung zugeordnet ist, und einem Kostenwert, der der Randbedingung in der ersten modifizierten Version der aktuellen Lösung zugeordnet ist, positiv abhängig ist.

8. Verfahren nach Anspruch 7, wobei die erste modifizierte Version der aktuellen Lösung unter den modifizierten Versionen der aktuellen Lösung, welche die Randbedingung erfüllen, einen minimalen Kostenwert aufweist, der der Randbedingung zugeordnet ist, oder die erste modifizierte Version der aktuellen Lösung unter Verwendung eines Greedy-Algorithmus erzielt wird.

9. Verfahren nach einem der Ansprüche 1 bis 8, wobei jedes der einen oder mehreren ersten quadratischen binären Optimierungsprobleme eine objektive Funktion umfasst, die eine Gesamtenergie darstellt, die den Clustern zugeordnet ist.

10. Verfahren nach einem der Ansprüche 1 bis 9, wobei das Clustering-Problem darauf abzielt, einen Referenzpunkt jedes der Cluster derart zu positionieren, dass eine aggregierte Abstandsmessung zwischen jedem Eingangsdatenpunkt, der dem Cluster zugeordnet ist, und dem Referenzpunkt des Clusters minimiert wird.

11. Verfahren nach einem der Ansprüche 1 bis 10, ferner umfassend:
Bestimmen, unter Verwendung eines Greedy-Algorithmus, einer Zuteilung einer Teilmenge der Eingangsdatenpunkte zu den Clustern basierend auf den gültigen Lösungen und den Konfidenzwerten, wobei die Zuteilung einen Konfidenzwert aufweist, der größer als jeder der Konfidenzwerte ist,
wobei der Schritt des Bestimmens, unter Verwendung des Greedy-Algorithmus, der Zuteilung der Teilmenge der Eingangsdatenpunkte zu den Clustern eine oder mehrere Iterationen umfasst, und die eine oder die mehreren Iterationen jeweils umfassen:
einen Schritt des Findens einer Permutation von Cluster-Etiketten in einer ersten Lösung der gültigen Lösungen, die dazu führt, dass eine Mindestanzahl von Eingangsdatenpunkten verschiedenen Clustern zwischen der ersten Lösung und einer zweiten Lösung zugeteilt wird;
einen Schritt des Aktualisierens der zweiten Lösung durch Entfernen eines oder mehrerer Eingangsdatenpunkte, die verschiedenen Clustern zugeteilt sind, durch die erste Lösung und die zweite Lösung; und
einen Schritt des Aktualisierens eines globalen Konfidenzwertes durch Addieren des Konfidenzwertes der ersten Lösung zu dem globalen Konfidenzwert,
wobei vor dem Aktualisierungsschritt einer anfänglichen Iteration der einen oder der mehreren Iterationen die zweite Lösung einen höchsten Konfidenzwert unter den gültigen Lösungen aufweist, der Konfidenzwert der ersten Lösung niedriger als der höchste Konfidenzwert ist, und wenn der Bestimmungsschritt mehrere Iterationen umfasst, sich die erste Lösung in jeder der Iterationen auf eine andere der gültigen Lösungen bezieht,
wobei ein anfänglicher Wert des globalen Konfidenzwertes gleich dem höchsten Konfidenzwert ist, und die eine oder die mehreren Iterationen enden, wenn der globale Konfidenzwert gleich oder größer als eine voreingestellte Schwelle ist.

12. Computersystem, umfassend:
ein Erzielungsmodul, das dazu konfiguriert ist, gültige Lösungen für ein Clustering-Problem des Zuteilens von Eingangsdatenpunkten zu Clustern basierend auf geschätzten Lösungen, die von einem Annealing-Solver erzeugt werden und einem oder mehreren ersten quadratischen binären Optimierungsproblemen, die das Clustering-Problem darstellen, entsprechen, zu erzielen, wobei jeder der Eingangsdatenpunkte Merkmale umfasst, die einem Objekt entsprechen;
ein Beurteilungsmodul, das dazu konfiguriert ist, eine Energie zu beurteilen, die jeder der gültigen Lösungen zugeordnet ist; und
ein erstes Bestimmungsmodul, das dazu konfiguriert ist, Konfidenzwerte der gültigen Lösungen basierend auf den beurteilten Energien zu bestimmen, wobei jeder der Konfidenzwerte eine geschätzte posteriore Wahrscheinlichkeit dafür ist, dass die entsprechende gültige Lösung angesichts der Eingangsdatenpunkte optimal ist,
wobei, wenn das Computersystem dazu konfiguriert ist, einen Merkmalsabgleichprozess auszuführen, die Merkmale, die in jedem der Eingangsdatenpunkte enthalten sind, aus einem der Bilder extrahiert werden, und das Computersystem dazu konfiguriert ist, die gültigen Lösungen und ihre Konfidenzwerte zu verwenden, um entsprechende Merkmale in den Bildern zu identifizieren, oder wenn das Computersystem dazu konfiguriert ist, einen Objektverfolgungsprozess auszuführen, die Merkmale, die in jedem der Eingangsdatenpunkte enthalten sind, aus einem der Videoeinzelbilder extrahiert werden, und das Computersystem dazu konfiguriert ist, die gültigen Lösungen und ihre Konfidenzwerte zu verwenden, um ein sich bewegendes Objekt über die Einzelbilder hinweg ausfindig zu machen.

13. Computerprogramm, umfassend Anweisungen, die, wenn sie von einem oder mehreren Prozessoren ausgeführt werden, es dem einen oder den mehreren Prozessoren ermöglichen, das Verfahren nach einem der Ansprüche 1 bis 11 auszuführen.

14. Computerlesbares Speichermedium, umfassend das Computerprogramm nach Anspruch 13.

## Revendications

1. Procédé de regroupement par grappes (100) mis en œuvre par ordinateur, comprenant les étapes suivantes :
obtenir (S101) des solutions valables à un problème de regroupement par grappes pour affecter des points de données d'entrée à des grappes sur la base de solutions estimées qui sont générées par un solveur par recuit et correspondant à un ou plusieurs premiers problèmes d'optimisation binaire quadratique représentant le problème de regroupement par grappes, dans lequel chacun des points de données d'entrée comprend des caractéristiques correspondant à un objet ;
évaluer (S102) une énergie associée à chacune des solutions valables ; et
déterminer (S103) des valeurs de confiance des solutions valables sur la base des énergies évaluées, dans lequel chacune des valeurs de confiance est une probabilité a posteriori estimée que la solution valable correspondante soit optimale compte tenu des points de données d'entrée,
dans lequel, lorsque le procédé de regroupement par grappes (100) mis en œuvre par ordinateur effectue un processus de concordance de caractéristiques, les caractéristiques comprises dans chacun des points de données d'entrée sont extraites de l'une des images, et ledit processus de concordance de caractéristiques utilise lesdites solutions valables et leurs valeurs de confiance pour identifier des caractéristiques correspondantes dans lesdites images, ou lorsque le procédé de regroupement par grappes (100) mis en œuvre par ordinateur effectue un processus de suivi d'objet, les caractéristiques comprises dans chacun des points de données d'entrée sont extraites de l'une des trames vidéo, et ledit processus de suivi d'objet utilise lesdites solutions valables et leurs valeurs de confiance pour localiser un objet en mouvement à travers lesdites trames.

2. Procédé selon la revendication 1, dans lequel les solutions valables satisfont à une ou plusieurs contraintes.

3. Procédé selon la revendication 1 ou 2, dans lequel un premier problème parmi le ou les premiers problèmes d'optimisation binaire quadratique comprend un terme de contrainte représentant la ou les contraintes, dans lequel
le terme de contrainte comporte un ou plusieurs multiplicateurs de Lagrange, chacun étant associé à une contrainte parmi la ou les contraintes, ou,
une valeur absolue du terme de contrainte dépend positivement d'une valeur absolue d'un degré de non-respect de chaque contrainte parmi la ou les contraintes dans les solutions au premier problème d'optimisation binaire quadratique.

4. Procédé selon la revendication 2 ou 3, dans lequel au moins certains des premiers problèmes d'optimisation binaire quadratique comprennent chacun un terme de contrainte différent représentant la ou les contraintes.

5. Procédé selon la revendication 4, comprenant en outre un processus de mise à jour itératif comprenant une ou plusieurs itérations ajustant chacune un ou plusieurs poids de contrainte, dans lequel l'un des différents termes de contrainte comprend le poids de contrainte ajusté ou les poids de contrainte ajustés, qui est ou sont obtenus au cours d'une itération parmi la ou les itérations.

6. Procédé selon la revendication 5, dans lequel l'une des itérations comprend :
le calcul d'une réduction de coût maximale associée au respect d'une contrainte sur la base d'une ou plusieurs solutions actuelles qui enfreignent la contrainte ; et
l'ajustement d'une valeur d'un poids de contrainte associé à la contrainte sur la base de la réduction de coût.

7. Procédé selon la revendication 6, comprenant en outre l'étape suivante :
modifier une solution parmi la ou les solutions actuelles pour obtenir une première version modifiée de la solution actuelle qui satisfait à la contrainte, dans lequel une valeur absolue de la réduction de coût dépend positivement d'une valeur absolue de la différence entre un coût associé à la contrainte dans la solution actuelle et un coût associé à la contrainte dans la première version modifiée de la solution actuelle.

8. Procédé selon la revendication 7, dans lequel la première version modifiée de la solution actuelle a un coût minimal associé à la contrainte parmi les versions modifiées de la solution actuelle qui satisfont à la contrainte, ou la première version modifiée de la solution actuelle est obtenue à l'aide d'un algorithme glouton.

9. Procédé selon l'une quelconque des revendications 1 à 8, dans lequel chaque premier problème parmi le ou les premiers problèmes d'optimisation binaire quadratique comprend une fonction objectif représentant une énergie totale associée aux grappes.

10. Procédé selon l'une quelconque des revendications 1 à 9, dans lequel le problème de regroupement par grappes vise à positionner un point de référence de chacune des grappes de manière à minimiser une mesure de distance agrégée entre chaque point de données d'entrée affecté à la grappe et le point de référence de la grappe.

11. Procédé selon l'une quelconque des revendications 1 à 10, comprenant en outre les étapes suivantes :
déterminer une affectation d'un sous-ensemble de points de données d'entrée aux grappes en utilisant un algorithme glouton sur la base des solutions valables et des valeurs de confiance, dans lequel l'affectation a une valeur de confiance supérieure à chacune des valeurs de confiance,
dans lequel l'étape de détermination de l'affectation du sous-ensemble de points de données d'entrée aux grappes en utilisant l'algorithme glouton comprend une ou plusieurs itérations, et chaque itération parmi la ou les itérations comprend :
une étape de recherche d'une permutation des étiquettes de grappes dans une première solution des solutions valables qui donne un nombre minimal de points de données d'entrée affectés à des grappes différentes, entre la première solution et une deuxième solution ;
une étape de mise à jour de la deuxième solution en supprimant un ou plusieurs points de données d'entrée affectés à des grappes différentes, par la première solution et la deuxième solution ; et
une étape de mise à jour d'une valeur de confiance globale en ajoutant une valeur de confiance de la première solution à la valeur de confiance globale,
dans lequel, avant l'étape de mise à jour d'une itération initiale parmi la ou les itérations, la deuxième solution présente la valeur de confiance la plus élevée parmi les solutions valables, la valeur de confiance de la première solution est inférieure à la valeur de confiance la plus élevée, et lorsque l'étape de détermination comprend de multiples itérations, la première solution de chacune des itérations fait référence à une solution différente des solutions valables,
dans lequel une valeur initiale de la valeur de confiance globale est égale à la valeur de confiance la plus élevée, et la ou les itérations prennent fin lorsque la valeur de confiance globale est égale ou supérieure à un seuil prédéfini.

12. Système informatique, comprenant :
un module d'obtention configuré pour obtenir des solutions valables à un problème de regroupement par grappes pour affecter des points de données d'entrée à des grappes sur la base de solutions estimées qui sont générées par un solveur par recuit et correspondant à un ou plusieurs premiers problèmes d'optimisation binaire quadratique représentant le problème de regroupement par grappes, dans lequel chacun des points de données d'entrée comprend des caractéristiques correspondant à un objet ;
un module d'évaluation configuré pour évaluer une énergie associée à chacune des solutions valables ; et
un premier module de détermination configuré pour déterminer des valeurs de confiance des solutions valables sur la base des énergies évaluées, dans lequel chacune des valeurs de confiance est une probabilité a posteriori estimée que la solution valable correspondante soit optimale compte tenu des points de données d'entrée,
dans lequel, lorsque le système informatique est configuré pour effectuer un processus de concordance de caractéristiques, les caractéristiques comprises dans chacun des points de données d'entrée sont extraites de l'une des images, et le système informatique est configuré pour utiliser lesdites solutions valables et leurs valeurs de confiance pour identifier des caractéristiques correspondantes dans lesdites images, ou lorsque le système informatique est configuré pour effectuer un processus de suivi d'objet, les caractéristiques comprises dans chacun des points de données d'entrée sont extraites de l'une des trames vidéo, et le système informatique est configuré pour utiliser lesdites solutions valables et leurs valeurs de confiance pour localiser un objet en mouvement à travers lesdites trames.

13. Programme informatique comprenant des instructions qui, lorsqu'elles sont exécutées par un ou plusieurs processeurs, permettent à ce ou ces processeurs de mettre en œuvre le procédé selon l'une quelconque des revendications 1 à 11.

14. Support de stockage lisible par ordinateur, comprenant le programme informatique selon la revendication 13.
